# FASCICULE DE BREVET EUROPEEN

(11) **EP 2 996 916 B1**
(45) Date de publication et mention de la délivrance du brevet: **16.08.2017**
(21) Numéro de dépôt: 14727875.8
(22) Date de dépôt: 30.04.2014
(51) Int. Cl.: B60W 10/02, B60W 10/06, B60W 10/10, B60W 30/18, B60K 6/52, B60W 50/00

(54) **PROCÉDÉ DE COMMANDE D'UN GROUPE MOTO PROPULSEUR A MOTEUR THERMIQUE ET A BOITE DE VITESSES AUTOMATISÉE**
VERFAHREN ZUR STEUERUNG EINER KRAFTEINHEIT MIT EINEM VERBRENNUNGSMOTOR UND EINEM AUTOMATIKGETRIEBE
METHOD FOR CONTROLLING A POWER UNIT WITH COMBUSTION ENGINE AND AUTOMATIC GEARBOX

(30) Priorité: 17.05.2013 FR 1354467
(43) Date de publication de la demande: 23.03.2016
(73) Titulaire: Peugeot Citroën Automobiles SA, 78140 Vélizy Villacoublay (FR)
(72) Inventeur: BARDET, Arnaud, F-78150 Le Chesnay (FR); FREIRE SUAREZ, Violette, F-78150 Le Chesnay (FR); DOUX, Florian, F-92800 Puteaux (FR)
(86) Numéro de dépôt international: PCT/FR2014/051038
(87) Numéro de publication internationale: WO 2014/184462

(56) Documents cités:
- FR-A1- 2 815 689
- FR-A1- 2 954 253

## Description

La présente invention est relative à un procédé de commande d'un groupe moto propulseur à moteur thermique et à boîte de vitesses automatisée.

Un problème est de gérer l'immobilisation du véhicule à boîte de vitesses automatisée. Cette immobilisation est effectuée soit par les freins seuls, soit aussi par la boîte de vitesses. Dans ce dernier cas, de façon à permettre l'immobilisation du véhicule par la transmission, il faut gérer une stratégie de décision de verrouillage ainsi que des actionneurs particuliers associés à des verrous ou autres moyens permettant par exemple la mise en prise des roues motrices via la boîte de vitesses. Ces actionneurs peuvent être complexes et onéreux.

Le document FR2834323 décrit un procédé et un dispositif pour actionner un blocage de stationnement d'une boîte de vitesses automatisée.

Pour gérer l'immobilisation du véhicule quand ce dernier est un véhicule hybride parallèle, d'autres problèmes se posent pour gérer la désactivation de motorisation initiée par une demande d'arrêt de fonctionnement du véhicule en coupant le contact, les solutions telles que celles proposées document FR2834323 ne suffisant pas pour régler ces autres problèmes. Un dispositif et un procédé de préparation à l'immobilisation d'un véhicule lorsqu'un dispositif d'allumage a été débranché sont présentés par le document FR2815689.

La présente invention a notamment pour but d'améliorer les solutions existantes.

A cet effet, l'invention a pour objet un procédé de commande d'un groupe moto propulseur à moteur thermique et à boîte de vitesses automatisée, associés via un embrayage, pour l'un des trains roulants d'un véhicule hybride parallèle susceptible de rouler sous l'action d'un moteur électrique prévu à l'autre des trains roulants du véhicule hybride parallèle. Le procédé comprend une phase de désactivation de motorisation initiée par une demande d'arrêt de fonctionnement du véhicule en coupant le contact alors que le groupe motopropulseur a sa boîte de vitesses qui est commandée à fonctionnement à l'un de ses modes de fonctionnement de marche avant ou de marche arrière tout en ayant ses rapports de démultiplication qui sont désengagés. Ladite phase de désactivation de motorisation comprend l'enchaînement d'une étape d'engagement d'un rapport de démultiplication de la boîte de vitesses et d'une étape de pilotage d'embrayage à fermeture.

Dans divers modes de réalisation du procédé selon l'invention, on peut éventuellement avoir recours en outre à l'une et/ou à l'autre des dispositions suivantes :
- il est attendu que la vitesse véhicule ou le régime d'arbre secondaire de la boîte de vitesses soient inférieurs à un seuil VminBV pour engager le rapport et que la vitesse véhicule soit inférieure à un seuil VminEMB pour commander la fermeture de l'embrayage ;
- l'étape d'engagement d'un rapport de démultiplication de la boîte de vitesses comprend une sous-étape de cible d'engagement de rapport et une sous-étape d'engagement proprement dit de ce rapport ;
- la sous-étape de cible d'engagement de rapport est conditionnée à la vitesse véhicule ou au régime de l'arbre secondaire de la boîte de vitesses inférieurs au seuil VminBV ;
- l'étape de pilotage d'embrayage à fermeture comprend des sous-étapes de cible de fermeture et de de mise en oeuvre de la fermeture ;
- la sous-étape de cible de fermeture de l'embrayage est conditionnée à la vitesse du véhicule inférieure au seuil VminEMB ;
- à la fin de la réalisation de la coupure du groupe moto propulseur, il a été attendu que le rapport de démultiplication de la boîte de vitesses soit engagé et que l'embrayage soit fermé en position embrayée de repos ;
- la fin de la réalisation de la coupure du groupe moto propulseur comprend l'extinction de calculateurs ;
- la phase de désactivation de motorisation comprend un état intermédiaire de désactivation pendant un intervalle de temps puis le passage à un état désactivé, l'étape d'engagement du rapport de démultiplication de la boîte de vitesses et l'étape de pilotage d'embrayage à fermeture intervenant pendant l'intervalle de temps à l'état intermédiaire de désactivation.

Par ailleurs, l'invention a également pour objet un véhicule hybride parallèle comprenant d'une part un système de train roulant ayant un groupe moto propulseur à moteur thermique et boîte de vitesses automatisée, associés via un embrayage, et d'autre part un autre train roulant susceptible de faire rouler le véhicule hybride parallèle sous l'action d'un moteur électrique. Le véhicule comprend un système de commande pourvu de calculateurs de mise en oeuvre du procédé de commande conforme à l'invention de manière que la phase de désactivation de motorisation puisse être mise en oeuvre à la demande d'arrêt de fonctionnement du véhicule en coupant le contact alors que le groupe motopropulseur a sa boîte de vitesses qui est à fonctionnement à l'un de ses modes de fonctionnement de marche avant ou de marche arrière tout en ayant ses rapports de démultiplication qui sont désengagés.

D'autres buts, caractéristiques et avantages de l'invention apparaîtront au cours de la description suivante d'un de ses modes de réalisation, donné à titre d'exemple non limitatif, en regard des dessins joints :
- la figure 1 est un schéma d'architecture d'un véhicule hybride permettant de mettre en oeuvre le procédé selon l'invention de commande de système de train roulant ;
- la figure 2 représente des chronographes de fonctionnement illustrant des paramètres du procédé selon l'invention.

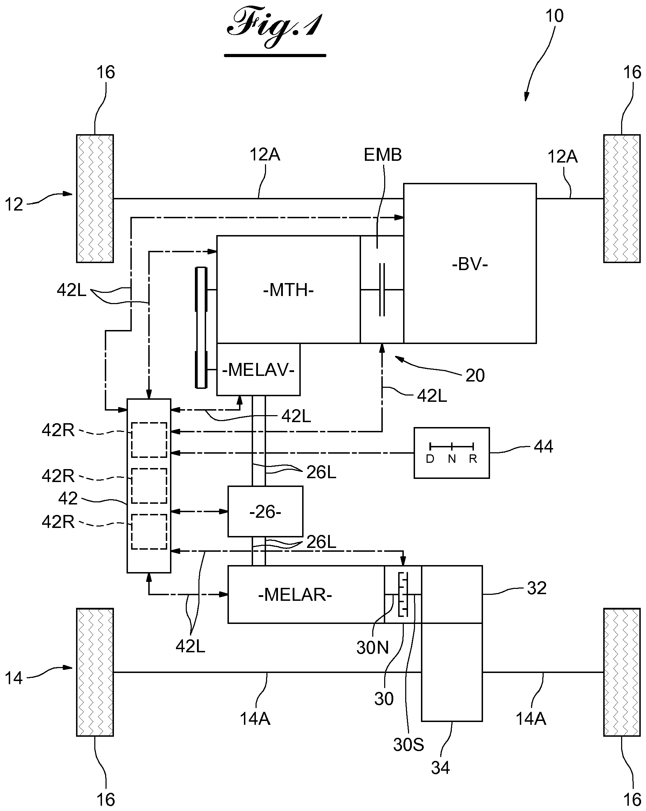

En se reportant aux figures, la référence 10 désigne un exemple de véhicule hybride parallèle selon l'invention, comprenant un train avant 12 et un train arrière 14 chacun pourvu de roues 16 pouvant être motrices suivant les situations de roulage. La figure 1 montre un exemple d'architecture du véhicule hybride parallèle 10 auquel le procédé de commande selon l'invention peut s'appliquer.

Des arbres de transmission avant 12A du train avant 12 sont prévus pour être entraînés en rotation par un groupe motopropulseur avant 20. Le groupe motopropulseur avant 20 comprend un moteur thermique MTH lié à une boîte de vitesses BV par l'intermédiaire d'un embrayage EMB, les arbres de transmission avant 12A étant en sortie de la boîte de vitesses BV. En outre, le groupe motopropulseur avant 20 comprend un démarreur associé au moteur thermique MTH en comprenant une machine électrique avant MELAV pour lancer ce moteur thermique qui est régulièrement à l'arrêt quand le véhicule ne roule pas, par exemple en environnement urbain. La machine avant MELAV comporte un moteur électrique alimenté en tension par une batterie 26. Qui est suffisamment puissante.

Les roues 16 du train arrière 14 du véhicule hybride 10 peuvent être entraînées par une machine arrière MELAR comportant un moteur électrique relié à des arbres de transmission arrière 14A du train arrière 14 par l'intermédiaire d'un dispositif de crabotage 30, d'un réducteur 32 et d'un différentiel 34. Le moteur électrique de la machine arrière MELAR est connecté électriquement à la batterie 26 qui est suffisamment puissante pour pouvoir entraîner en rotation les roues 16 du train arrière 14 du véhicule hybride 10 alors que le moteur thermique MTH est éteint. Des liaisons d'alimentation 26L relient la batterie 26 aux machines électriques MELAV et MELAR.

Le dispositif de crabotage 30 comporte une entrée 30N à organe tournant pourvu de crabots, cette entrée étant reliée à rotation au rotor de la machine électrique tournante arrière MELAR. Le dispositif de crabotage 30 comporte une sortie 30S à organe tournant pourvu de crabots, cette sortie étant reliée à rotation aux arbres de transmission 14A des roues 16 du train arrière par l'intermédiaire du réducteur 32 et du différentiel 34 qui répartit le couple sur ces deux arbres.

Un système de commande du véhicule hybride parallèle comprend un système de supervision 42 de la chaîne de traction pour coordonner le fonctionnement de la motorisation par le groupe moto propulseur avant 20 et la machine électrique arrière MELAR, via des liaisons de données de commande 42L. Ces liaisons 42L sont représentées en traits mixtes à la figure 1. Dans le système de supervision 42, des unités de pilotage 42R sont représentées en traits pointillés. Dans ces unités, il peut y avoir par exemple et de manière non limitative un calculateur dédié à la machine électrique arrière MELAR et à son dispositif de crabotage 30, un calculateur dédié au pilotage du moteur thermique MTH avec la machine électrique avant MELAV et un calculateur dédié au pilotage de la boîte de vitesses BV avec l'embrayage EMB. Le système de supervision 42 permet de décider du mode de roulage en répartissant la puissance à obtenir en fonction des demandes du conducteur, afin d'obtenir une optimisation des points de fonctionnement.

Le système de supervision 42 peut donc comprendre des calculateurs différents pour le fonctionnement du moteur MTH, de la boîte de vitesses BV, des machines électriques et leurs alimentations, en ayant éventuellement des boîtiers séparés pour les différents calculateurs. De manière générale, chaque organe comme le moteur MTH, la boîte de vitesses BV, ou la machines électriques arrière MELAR est piloté par un système de contrôle rapproché propre sous la commande du système dit de supervision 42 qui prend les décisions et synchronise les actions pour répondre à la volonté du conducteur. Les liaisons 42L de transmission de données de commande sont symbolisées par principe.

De manière générale, le système de supervision 42 gère le fonctionnement de la mise en mouvement du véhicule, en gérant en particulier la robotisation de la machine électrique arrière et du dispositif de crabotage de manière à éviter autant que possible les chocs dans les divers éléments mécaniques des trains roulants ou autres pièces tournantes des machines électriques. En outre, ce superviseur 42, en fonction des situations de vie et de l'état du véhicule, décide du mode de roulage, coordonne toutes les phases transitoires et choisit les points de fonctionnement afin d'optimiser la consommation de carburant, la dépollution et l'agrément du véhicule.

Comme il ressort de la figure 1, l'architecture hybride du véhicule 10 permet un découplage total entre le train avant 12 et le train arrière 14. Le véhicule hybride 10 peut ainsi fonctionner dans différents modes de roulage. Ces modes de roulages comprennent en particulier un mode électrique utilisant la machine électrique arrière MELAR, le moteur thermique MTH étant arrêté et la boîte de vitesses BV étant au point mort et/ou l'embrayage EMB ouvert. Ces modes de roulages comprennent un mode de fonctionnement appelé «Traction Hybride» (HY), permettant un roulage en utilisant ces deux motorisations pour que les quatre roues soient motrices. Dans d'autres modes de roulage, la machine électrique avant MELAV peut aussi aider le moteur thermique MTH.

Le véhicule peut donc fonctionner selon divers modes de propulsion, gérés par le système de supervision 42. Par exemple, sur une demande d'accélération ou de vitesse faible de la part du conducteur, le système n'utilisera que l'énergie électrique, pour un mode de fonctionnement appelé «Traction Electrique Pure» (TEP) alors que dans le cas d'une volonté de plus forte accélération de la part du conducteur, le système exploitera les deux types d'énergies de façon combinées, pour le mode de fonctionnement appelé «Traction Hybride» (HY). Pour passer du mode TEP au mode HY et inversement, il est nécessaire d'ouvrir et de fermer la chaine de traction du train avant, soit au moyen du système de couplage constitué par l'embrayage EMB, soit au moyen de la boite de vitesse BV, soit des deux ensembles.

La boîte de vitesses comporte plusieurs rapports discrets de démultiplication, par exemple 6 rapports et elle est par exemple de type à arbres parallèles supportant des pignons d'engrenages, chaque engrenage déterminant un rapport de démultiplication. Elle est de plus de type robotisée en ayant son embrayage EMB associé qui est aussi de type robotisé, sous le contrôle global du système de supervision 42 qui gère le groupe motopropulseur.

La volonté du conducteur de transmettre du couple à la roue lorsqu'il appuie sur l'accélérateur est indiquée au système de supervision 42. De même, le sens de déplacement souhaité, vers l'avant ou l'arrière, est indiquée au système de supervision 42 au moyen d'un dispositif d'interface 44 de type levier, molette, boutons poussoirs, permettant au moins d'indiquer l'état de fonctionnement souhaité :
- la marche avant (D) ;
- la marche arrière (R) ;
- aucun déplacement désiré (N).

Le choix du rapport à engager est géré par les divers calculateurs soit de façon automatique, soit de façon manuelle en obéissant à des instructions venant du conducteur via des commandes dédiées. Pour la gestion automatique, le choix du rapport de démultiplication dépend principalement de la position de l'interface (R, D) l'enfoncement des pédales d'accélérateur ou de frein, de la vitesse véhicule, de la pente, du mode de traction TEP ou HY, etc... Pour la gestion manuelle, le choix du rapport de démultiplication dépend principalement de la commande par le conducteur via les commandes dédiées du type : le levier d'interface 44 ou autre dispositif d'interface de commande implanté au plancher, à la planche de bord, à proximité du volant comme des palettes de commandes sous volant, ou tout autre dispositif permettant d'indiquer au système la volonté de changer de démultiplication.

Lorsque le véhicule roule sur un itinéraire à profils variés, l'interface 44 étant en position (D), le mode TEP et le mode HY sont choisis alternativement par système de supervision 42 et l'automate chargé du choix du rapport de démultiplication peut décider à tout moment de placer la boîte de vitesses BV au neutre. Cette mise au neutre permet par exemple, de minimiser les efforts résultant des frottements interne de la boîte de vitesses qui s'opposent à l'avancement du véhicule, ou par exemple, de minimiser le risque de décélération excessive non désirée qui résulterait d'une fermeture intempestive de l'embrayage. Le neutre de la boîte de vitesses peut être choisi par le système de supervision 42 quand le véhicule n'est pas en mouvement, les rapports de démultiplication de la boîte de vitesses étant désengagés.

Quand une demande de coupure du groupe moto propulseur 20 intervient, par demande d'arrêt de fonctionnement du véhicule en coupant le contact, il faut alors gérer l'immobilisation du véhicule soit par les freins seuls, soit aussi par la boîte de vitesses et le moteur thermique. Dans ce dernier cas, de façon à permettre l'immobilisation du véhicule par la transmission, il faut gérer une stratégie de décision d'engagement d'un rapport lors de la désactivation du groupe moto propulseur 20, le levier d'interface 44 étant en position (D) ou (R) et non en position neutre (N) ou en position de parking si cette position existe.

Lors d'une désactivation du groupe moto propulseur 20 demandée par le conducteur pendant le mode de fonctionnement « Traction Electrique Pure » (TEP), que cette désactivation ait lieu en roulant ou à l'arrêt véhicule, alors que le levier d'interface 44 est sur une autre position que le neutre (N) et que la boîte de vitesses BV est au neutre pour les besoins du roulage TEP, l'automate de décision de changement de rapport choisit un rapport approprié à engager. En mode de roulage (D) ou (R), la boîte de vitesses BV est au neutre quand elle a ses rapports de démultiplication qui sont désengagés. Le rapport à engager pourra être n'importe lequel des rapports disponibles, mais sera de manière préférentielle le plus petit possible, de façon à offrir une démultiplication la plus courte possible et offrir le maintien maximum véhicule par la résistance du moteur à l'arrêt.

Selon le rapport choisi et pour respecter les contraintes organiques de la boîte de vitesses BV, entre autres liées à la protection des synchroniseurs, au régime maxi admissible par l'arbre primaire, mais aussi pour des contrainte d'agrément, l'automate attendra, que la vitesse véhicule ou régime de l'arbre secondaire de la boîte de vitesses BV, soient inférieurs à un seuil réglable VminBV pour engager le rapport. Pour des contraintes d'agrément, mais également de sécurité, l'automate de commande de l'embrayage EMB attendra que le rapport soit engagé et que la vitesse du véhicule soit inférieure à un seuil VminEMB pour commander alors sa fermeture. Pour assurer la réalisation de l'engagement du rapport, mais également pour des contraintes d'agrément, l'automate qui synchronise la réalisation de la coupure du groupe moto propulseur 20, notamment l'extinction des calculateurs, attendra que le rapport soit engagé et l'embrayage fermé pour autoriser la désactivation.

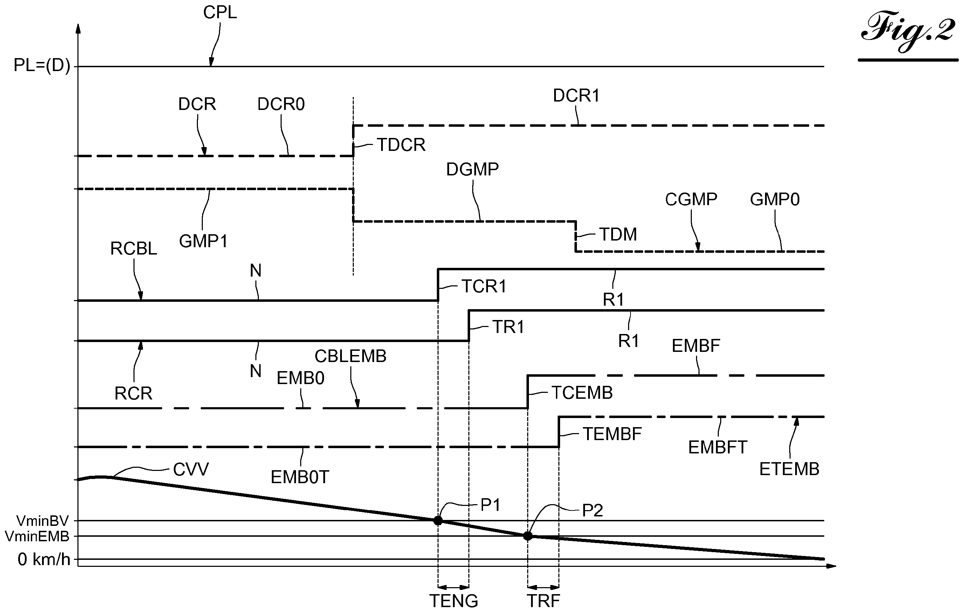

La figure 2 représente les courbes pour la stratégie qui a été décrite. La stratégie de phase de coupure de motorisation initiée par une demande d'arrêt de fonctionnement du véhicule en coupant le contact.

La courbe CVV en bas de cette figure montre la variation de la vitesse du véhicule qui décroit en passant par le seuil VminBV et le seuil VminEMB pour atteindre zéro kilomètre par heure. La courbe CPL en haut de cette figure montre la position PL du levier d'interface 44, ici la position (D) de marche avant.

Cette stratégie de phase de coupure de motorisation est initiée par une demande d'arrêt de fonctionnement du véhicule en coupant le contact. En dessous de la courbe CPL, la courbe DCR de demande de coupure montre à un instant donné TDCR l'instruction par le conducteur de demande de coupure du groupe moto propulseur 20, la courbe passant à l'instant TDCR d'un état zéro de demande de coupure DCR0 à un état actif de demande de coupure DCR1.

A la figure 2, la troisième courbe à partir du haut est référencée CGMP et elle correspond à l'état du groupe moto propulseur 20 qui est tout d'abord à l'état actif GMP1. A l'instant TDCR, le groupe moto propulseur 20 passe à un état intermédiaire de désactivation DGMP pendant un certain intervalle de temps puis passe à l'instant TDM à un état désactivé GMP0. L'instant TDM correspond à l'instant final de réalisation de la coupure du groupe moto propulseur.

La courbe CGMP montre globalement la phase de désactivation du groupe moto propulseur, incluant l'instant TDCR de sous étape d'instruction par le conducteur de demande de coupure, l'intervalle de temps de la mise en oeuvre de la désactivation DGMP et l'instant final de passage à l'état désactivé GMP0. Pendant l'intervalle de temps de mise en oeuvre de la désactivation DGMP interviennent une étape d'engagement d'un rapport de démultiplication de la boîte de vitesses et une étape de pilotage d'embrayage à fermeture.

La quatrième courbe à partir du haut de la figure 2 est référencée RCBL et elle correspond au rapport cible qui est tout d'abord le neutre auquel tous les rapports de démultiplication sont dégagés. Après l'instant TDCR et après un très bref temps de calcul des calculateurs, le rapport cible devient à l'instant TCR1 le premier rapport R1 de démultiplication. L'instant TCR1 de changement de rapport cible est conditionné à la vitesse du véhicule qui doit être inférieure à VminBV. Ainsi, dans l'exemple de fonctionnement représenté à la figure 2, l'instant TCR1 de changement de rapport cible intervient quand la vitesse du véhicule décroit en passant sous le seuil VminBV, ce passage de seuil étant marqué par le point P1 à la courbe CVV.

La cinquième courbe RCR à partir du haut de la figure 2 correspond au rapport courant qui est tout d'abord le neutre de désengagement de tous les rapports de démultiplication. Après un intervalle de temps de réalisation d'engagement de rapport TENG à partir de l'instant TCR1, le rapport courant devient à l'instant TR1 égal au rapport cible R1 qui est le premier rapport R1 de démultiplication.

La quatrième courbe RCBL et la cinquième courbe RCR montrent respectivement la sous-étape de cible d'engagement de rapport et la sous-étape de l'engagement proprement dit de ce rapport, dans l'étape d'engagement d'un rapport de démultiplication de la boîte de vitesses.

La sixième courbe à partir du haut de la figure 2 est référencée CBLEMB et elle correspond à la cible d'état d'embrayage qui est tout d'abord en demande d'ouverture EMB0. Après l'instant TR1 d'engagement de rapport de démultiplication, à un instant TCEMB, la cible d'état d'embrayage CBLEMB passe en demande de fermeture. L'instant TCEMB de consigne de fermeture d'embrayage est conditionné à la vitesse du véhicule qui doit être inférieure à VminEMB. Ainsi, dans l'exemple de fonctionnement représenté à la figure 2, l'instant TCEMB de consigne de fermeture d'embrayage intervient quand la vitesse du véhicule décroit en passant sous le seuil VminBV, ce passage de seuil étant marqué par le point P2 à la courbe CVV.

La septième courbe à partir du haut de la figure 2 est référencée ETEMB et elle correspond l'état de l'embrayage qui est tout d'abord en état d'ouverture EMB0T. Après un intervalle de temps de réalisation de fermeture d'embrayage TRF à partir de l'instant TCEMB de consigne de fermeture d'embrayage, l'embrayage devient à l'instant TEMBF à son état de fermeture EMBFT permettant de transmettre du couple.

La sixième courbe CBLEMB de cible d'état d'embrayage et la septième courbe ETEMB de l'état de l'embrayage montrent respectivement les sous-étapes correspondantes de cible de fermeture et de de mise en oeuvre de la fermeture dans l'étape de pilotage d'embrayage à fermeture.

A la fin de la réalisation de coupure du groupe moto propulseur, l'instant TDM de passage à l'état désactivé GMPO dudit groupe est postérieur à l'instant TEMBF de passage à l'état de fermeture EMBFT de l'embrayage. Ainsi, à la réalisation de la coupure du groupe moto propulseur 20, notamment l'extinction des calculateurs, il a bien été attendu que le rapport de démultiplication de la boîte de vitesses soit engagé et que l'embrayage soit fermé en position embrayée de repos.

Avantageusement, la stratégie de mise en prise du moteur thermique MTH avec les roues 16 du train avant du véhicule hybride parallèle 10, via l'embrayage EMB et la boîte de vitesses BV permet d'éviter toute difficulté de manipulation de levier par le conducteur. Cette stratégie facilite aussi le profil de mission des actionneurs internes à la boîte de vitesses, ces actionneurs ne nécessitant pas d'aménagement de type verrou ou autre pour la mise en prise. En outre, cette mise en prise est sécurisée au moins par les étapes d'enchaînement de coupure du moteur thermique, d'engagement de rapport de démultiplication et de pilotage d'embrayage incluant les paramètres de contrôle de la vitesse du véhicule.

Le procédé de commande a été décrit en considérant que le levier d'interface 44 est en position (D) de marche avant, en incluant l'engagement d'un rapport de marche avant de la boîte de vitesses. Ce procédé peut s'appliquer quand le levier d'interface est en position (R) de marche arrière, en incluant l'engagement d'un rapport de marche arrière de la boîte de vitesses. Le principe de fonctionnement est inchangé. Le procédé s'applique quand la boîte de vitesses n'est pas forcée en mode (N) de fonctionnement au neutre ou n'est pas en commande forcée de blocage en stationnement par une position déterminée que pourrait occuper le levier d'interface quand le véhicule est à l'arrêt, une telle commande forcée de blocage en stationnement s'actionnant par le conducteur après immobilisation du véhicule et arrêt complet de la motorisation.

En variante le moteur thermique entraîne les roues de train arrière et l'hybridation électrique entraîne les roues du train avant du véhicule hybride parallèle.

## Revendications

1. Procédé de commande d'un groupe moto propulseur (20) à moteur thermique (MTH) et à boîte de vitesses (BV) automatisée, associés via un embrayage (EMB), pour l'un (12) des trains roulants (12, 14) d'un véhicule hybride parallèle (10) susceptible de rouler sous l'action d'un moteur électrique (MELAR) prévu à l'autre (14) des trains roulants du véhicule hybride parallèle, le procédé comprenant une phase de désactivation de motorisation (TDCR, DGMP, TDM) initiée par une demande d'arrêt de fonctionnement du véhicule (TDCR) en coupant le contact alors que le groupe motopropulseur (20) a sa boîte de vitesses (BV) qui est commandée à fonctionnement à l'un de ses modes de fonctionnement de marche avant (D) ou de marche arrière (R) tout en ayant ses rapports de démultiplication qui sont désengagés, ladite phase de désactivation de motorisation comprenant l'enchaînement d'une étape d'engagement d'un rapport de démultiplication (R1) de la boîte de vitesses (TCR1, TENG, TR1) et d'une étape de pilotage d'embrayage (TCEMB, TRF, TEMBF) à fermeture.

2. Procédé selon la revendication précédente, **caractérisé en ce qu'**il est attendu que la vitesse véhicule ou le régime d'arbre secondaire de la boîte de vitesses (BV) soient inférieurs à un seuil VminBV pour engager le rapport et que la vitesse véhicule soit inférieure à un seuil VminEMB pour commander la fermeture de l'embrayage (EMB).

3. Procédé selon l'une quelconque des revendications précédentes, **caractérisé en ce que** l'étape d'engagement d'un rapport (R1) de démultiplication de la boîte de vitesses comprend une sous-étape de cible (TCR1) d'engagement de rapport et une sous-étape d'engagement proprement dit (TR1) de ce rapport.

4. Procédé selon la revendication précédente et la revendication 2, **caractérisé en ce que** la sous-étape de cible (TCR1) d'engagement de rapport est conditionnée à la vitesse véhicule ou au régime de l'arbre secondaire de la boîte de vitesses (BV) inférieurs au seuil VminBV.

5. Procédé selon l'une quelconque des revendications précédentes, **caractérisé en ce que** l'étape de pilotage d'embrayage à fermeture comprend des sous-étapes de cible (TCEMB) de fermeture et de de mise en oeuvre (TEMBF) de la fermeture.

6. Procédé selon la revendication précédente et la revendication 2, **caractérisé en ce que** la sous-étape de cible (TCEMB) de fermeture de l'embrayage est conditionnée à la vitesse du véhicule inférieure au seuil VminEMB.

7. Procédé selon l'une quelconque des revendications précédentes, **caractérisé en ce que**, à la fin de la réalisation (TDM) de la coupure du groupe moto propulseur (20), il a été attendu que le rapport de démultiplication de la boîte de vitesses soit engagé et que l'embrayage soit fermé en position embrayée de repos.

8. Procédé selon la revendication précédente, **caractérisé en ce que** la fin de la réalisation (TDM) de la coupure du groupe moto propulseur (20) comprend l'extinction de calculateurs.

9. Procédé selon l'une quelconque des revendications précédentes, **caractérisé en ce que** la phase de désactivation de motorisation (TDCR, DGMP, TDM) comprend un état intermédiaire de désactivation (DGMP) pendant un intervalle de temps puis le passage à un état désactivé (GMPO), l'étape d'engagement du rapport de démultiplication de la boîte de vitesses (TCR1, TENG, TR1) et l'étape de pilotage d'embrayage (TCEMB, TRF, TEMBF) à fermeture intervenant pendant l'intervalle de temps à l'état intermédiaire de désactivation (DGMP).

10. Véhicule hybride parallèle (10) comprenant d'une part un système de train roulant (12) ayant un groupe moto propulseur (20) à moteur thermique (MTH) et à boîte de vitesses (BV) automatisée, associés via un embrayage (EMB), et d'autre part un autre train roulant (14) susceptible de faire rouler le véhicule hybride parallèle sous l'action d'un moteur électrique (MELAR), le véhicule comprenant un système de commande (42, 42L) pourvu de calculateurs de mise en oeuvre du procédé de commande conforme à l'une des revendications précédentes de manière que la phase de désactivation de motorisation (TDCR, DGMP, TDM) puisse être mise en oeuvre à la demande d'arrêt (TDCR) de fonctionnement du véhicule en coupant le contact alors que le groupe motopropulseur (20) a sa boîte de vitesses (BV) qui est à fonctionnement à l'un de ses modes de fonctionnement de marche avant (D) ou de marche arrière (R) tout en ayant ses rapports de démultiplication qui sont désengagés.

## Patentansprüche

1. Verfahren zum Steuern eines Antriebsaggregats (20) mit Brennkraftmaschine (MTH) und mit Automatikgetriebe (BV), die über eine Kupplung (EMB) verbunden sind, für eines (12) der Fahrwerke (12, 14) eines parallelen Hybridfahrzeugs (10), das geeignet ist, unter der Einwirkung eines Elektromotors (MELAR) zu fahren, der an dem anderen (14) der Fahrwerke des parallelen Hybridfahrzeugs vorgesehen ist, wobei das Verfahren eine Maschinendeaktivierungsphase (TDCR, DGMP, TDM) umfasst, die durch eine Betriebsunterbrechungsanfrage des Fahrzeugs (TDCR) eingeleitet wird, indem die Zündung ausgeschaltet wird, während das Antriebsaggregat (20) sein Schaltgetriebe (BV) mit seinem Vorwärtsbetriebsmodus (D) oder Rückwärtsbetriebsmodus (R) gesteuert hat, während gleichzeitig seine Untersetzungsgänge ausgerückt sind, wobei die Maschinendeaktivierungsphase das Verketten eines Einrückschritts eines Untersetzungsgangs (R1) des Schaltgetriebes (TCR1, TENG, TR1) und eines Kupplungssteuerschritts mit Schließen (TCEMB, TRF, TEMBF) umfasst.

2. Verfahren nach dem vorhergehenden Anspruch, **dadurch gekennzeichnet, dass** gewartet wird, bis die Geschwindigkeit des Fahrzeugs oder Drehzahl der Sekundärwelle des Schaltgetriebes (BV) niedriger ist als ein Schwellenwert VminBV, um den Gang einzurücken, und dass die Geschwindigkeit des Fahrzeugs geringer ist als ein Schwellenwert VminEMB, um das Schließen der Kupplung (EMB) zu steuern.

3. Verfahren nach einem der vorhergehenden Ansprüche, **dadurch gekennzeichnet, dass** der Schritt des Einrückens eines Untersetzungsgangs (R1) des Schaltgetriebes einen Zielunterschritt (TCR1) des Gangeinrückens und einen Unterschritt des eigentlichen Einrückens (TR1) dieses Gangs umfasst.

4. Verfahren nach dem vorhergehenden und Anspruch 2, **dadurch gekennzeichnet, dass** der Zielunterschritt (TCR1) des Gangeinrücksens von der Geschwindigkeit des Fahrzeugs oder der Drehzahl der Sekundärwelle des Schaltgetriebes (BV), die unter dem Schwellenwert VminBV sind, abhängt.

5. Verfahren nach einem der vorhergehenden Ansprüche, **dadurch gekennzeichnet, dass** der Kupplungssteuerschritt mit Schließen Zielunterschritte (TCEMB) des Schließens oder Umsetzens (TEMBF) des Schließens umfasst.

6. Verfahren nach dem vorhergehenden Anspruch und nach Anspruch 2, **dadurch gekennzeichnet, dass** der Zielunterschritt (TCEMB) des Schließens der Kupplung davon abhängt, ob die Geschwindigkeit des Fahrzeugs niedriger ist als der Schwellenwert VminEMB.

7. Verfahren nach einem der vorhergehenden Ansprüche, **dadurch gekennzeichnet, dass** am Ende des Ausführens (TDM) des Unterbrechens des Antriebsaggregats (20) darauf gewartet wird, dass der Untersetzungsgang des Schaltgetriebes eingerückt wird, und dass die Kupplung in gekoppelter Ruheposition geschlossen ist.

8. Verfahren nach dem vorhergehenden Anspruch, **dadurch gekennzeichnet, dass** das Ende der Ausführung (TDM) der Unterbrechung des Antriebsaggregats (20) das Erlöschen von Rechnern umfasst.

9. Verfahren nach einem der vorhergehenden Ansprüche, **dadurch gekennzeichnet, dass** die Antriebsdeaktivierungsphase (TDCR, DGMP, TDM) einen Zwischendeaktivierungszustand (DGMP) während eines Zeitintervalls, und dann das Übergehen auf den deaktivierten Zustand (GMP0) umfasst, wobei der Schritt des Einrückens des Untersetzungsgangs des Schaltgetriebes (TCR1, TENG, TR1) und der Kupplungssteuerschritt (TCEMB, TRF, TEMBF) mit Schließen während des Zeitintervalls im Zwischendeaktivierungszustand (DGMP) stattfinden.

10. Paralleles Hybridfahrzeug (10), das einerseits ein Fahrwerkssystem (12) umfasst, das ein Antriebsaggregat (20) mit Brennkraftmaschine (MTH) und Automatikgetriebe (BV) hat, die über eine Kupplung (EMB) verbunden sind, und andererseits ein Fahrwerk (14), das das parallele Hybridfahrzeug unter der Einwirkung eines Elektromotors (MELAR) fahren lassen kann, wobei das Fahrzeug ein Steuersystem (42, 42L) umfasst, das mit Rechnern zum Umsetzen des Steuerverfahrens nach einem der vorhergehenden Ansprüche derart versehen ist, dass die Antriebsdeaktivierungsphase (TDCR, DGMP, TDM) bei der Unterbrechungsanfrage (TDCR) des Betriebs des Fahrzeugs umgesetzt werden kann, indem die Zündung ausgeschaltet wird, während das Antriebsaggregat (20) sein Schaltgetriebe (BV) mit Funktionieren in der Vorwärtsbetriebsart (D) oder Rückwärtsbetriebsart (R) hat, während seine Untersetzungsgänge ausgerückt sind.

## Claims

1. A method for controlling a power unit (20) with combustion engine (MTH) and automatic gearbox (BV), which are connected via a clutch (EMB), for one (12) of the wheelsets (12, 14) of a parallel hybrid vehicle (10) capable of running under the action of an electric motor (MELAR) provided for the other (14) of the wheelsets of the parallel hybrid vehicle, the method including a phase (TDCR, DGMP, TDM) of deactivating the drive, which phase is initiated by a command to stop operation of the vehicle (TDCR) by cutting the contact while the power unit (20) has its gearbox (BV) which is commanded to operate in one of its modes of operation in forward gear (D) or reverse gear (R) whilst having its step-down ratios which are disengaged, said phase of deactivating the drive including the sequencing of a step of engaging a step-down ratio (R1) of the gearbox (TCR1, TENG, TR1) and a step of controlling the clutch to close (TCEMB, TRF, TEMBF).

2. The method according to the preceding claim, **characterized in that** it is expected that vehicle speed or the speed of the secondary shaft of the gearbox (BV) are less than a threshold VminBV for engaging the ratio and that the vehicle speed is less than a threshold VminEMB for commanding the closure of the clutch (EMB).

3. The method according to any one of the preceding claims, **characterized in that** the step of engaging a step-down ratio (R1) of the gearbox includes a sub-step (TCR1) of target engagement of a ratio and a sub-step of actual engagement (TR1) of this ratio.

4. The method according to the preceding claim and Claim 2, **characterized in that** the sub-step (TCR1) of target engagement of a ratio is conditioned to the vehicle speed or to the speed of the secondary shaft of the gearbox (BV) less than the threshold VminBV.

5. The method according to any one of the preceding claims, **characterized in that** the step of commanding the clutch to close includes sub-steps of target closure (TCEMB) and of implementation of closure (TEMBF).

6. The method according to the preceding claim and Claim 2, **characterized in that** the sub-step of target closure (TCEMB) of the clutch is conditioned to the speed of the vehicle less than the threshold VminEMB.

7. The method according to any one of the preceding claims, **characterized in that**, at the end of realization (TDM) of the cutting off of the power unit (20), it was expected that the step-down ratio of the gear box is engaged and that the clutch is closed in clutched position of rest.

8. The method according to the preceding claim, **characterized in that** the end of the realization (TDM) of the cutting off of the power unit (20) includes the cutting off of computers.

9. The method according to any one of the preceding claims, **characterized in that** the phase of deactivating the drive (TDCR, DGMP, TDM) includes an intermediate state of deactivation (DGMP) during an interval of time, then passage to a deactivated state (GMP0), the step of engaging a step-down ratio of the gearbox (TCR1, TENG, TR1) and the step of commanding the closure of the clutch (TCEMB, TRF, TEMBF) intervening during the interval of time at the intermediate state of deactivation (DGMP).

10. A parallel hybrid vehicle (10) including on the one hand a wheelset system (12) having a power unit (20) with combustion engine (MTH) and automatic gearbox (BV), which are connected via a clutch (EMB), and on the other hand another wheelset (14) capable of causing the parallel hybrid vehicle to run under the action of an electric motor (MELAR), the vehicle including a control system (42, 42L) provided with computers for implementation of the control method according to one of the preceding claims, such that the phase (TDCR, DGMP, TDM) of deactivating the drive can be implemented at the command to stop operation of the vehicle (TDCR) by cutting the contact while the power unit (20) has its gearbox (BV) which is in operation in one of its modes of operation in forward gear (D) or reverse gear (R) whilst having its step-down ratios which are disengaged.
